# EUROPEAN PATENT APPLICATION

(11) **EP 4 836 550 A1**
(43) Date of publication of application: **04.11.2026**
(21) Application number: 23962941.3
(22) Date of filing: 29.12.2023
(51) Int. Cl.: H04W 64/00

(54) **POSITIONING METHODS, TERMINAL DEVICES AND NETWORK DEVICES**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/143650
(87) International publication number: WO 2025/138267

(57) **Abstract**

A method for positioning, a terminal device and a network device are provided according to the present disclosure. The method includes: receiving, by a terminal device at a first position, a first reference signal transmitted by a network device, and receiving, by the terminal device at a second position, a second reference signal transmitted by the network device. A first measurement information of the first reference signal and a second measurement information of the second reference signal are configured to position the terminal device.

## Description

### TECHNICAL FIELD

The present disclosure relates to the technical field of communication, and in particular to a method for positioning, a terminal device and a network device.

### BACKGROUND

In the process of positioning a terminal device, the commonly used methods at present are: positioning by the terminal device receiving reference signals transmitted by multiple network devices, or positioning by the terminal device transmitting reference signals to multiple network devices. The above positioning methods have high requirements on the consistency of hardware performance among multiple network devices, which is not beneficial to improving the positioning accuracy of the terminal device.

### SUMMARY

A method for positioning, a terminal device and a network device are provided according to the present disclosure. Various aspects involved in the embodiments of the present disclosure are described below.

In a first aspect, a method for positioning is provided. The method includes: receiving, by a terminal device at a first position, a first reference signal transmitted by a network device, and receiving, by the terminal device at a second position, a second reference signal transmitted by the network device. A first measurement information of the first reference signal and a second measurement information of the second reference signal are configured to position the terminal device.

In a second aspect, a method for positioning is provided. The method includes: transmitting, by a network device, a first reference signal to a terminal device in response to the terminal device being at a first position, and transmitting, by the network device, a second reference signal to the terminal device in response to the terminal device being at a second position. A first measurement information of the first reference signal and a second measurement information of the second reference signal are configured to position the terminal device.

In a third aspect, a method for positioning is provided. The method includes: transmitting, by a terminal device at a third position, a third reference signal to a network device, and transmitting, by the terminal device at a fourth position, a fourth reference signal to the network device. A third measurement information of the third reference signal and a fourth measurement information of the fourth reference signal are configured to position the terminal device.

In a fourth aspect, a method for positioning is provided. The method includes: receiving, by a network device, a third reference signal transmitted by a terminal device at a third position, and receiving, by the network device, a fourth reference signal transmitted by the terminal device at a fourth position. A third measurement information of the third reference signal and a fourth measurement information of the fourth reference signal are configured to position the terminal device.

In a fifth aspect, a terminal device is provided. The terminal device includes a receiving unit, configured to receive, at a first position, a first reference signal transmitted by a network device, and the receiving unit is further configured to receive, at a second position, a second reference signal transmitted by the network device. A first measurement information of the first reference signal and a second measurement information of the second reference signal are configured to position the terminal device.

In a sixth aspect, a network device is provided. The network device includes a transmitting unit, configured to transmit a first reference signal to a terminal device in response to the terminal device being at a first position, and the transmitting unit is further configured to transmit a second reference signal to the terminal device in response to the terminal device being at a second position. A first measurement information of the first reference signal and a second measurement information of the second reference signal are configured to position the terminal device.

In a seventh aspect, a terminal device is provided. The terminal device includes a transmitting unit, configured to transmit, at a third position, a third reference signal to a network device, and the transmitting unit is further configured to transmit, at a fourth position, a fourth reference signal to the network device. A third measurement information of the third reference signal and a fourth measurement information of the fourth reference signal are configured to position the terminal device.

In an eighth aspect, a network device is provided. The network device includes a receiving unit, configure to receive a third reference signal transmitted by a terminal device at a third position, and the receiving unit is further configured to receive a fourth reference signal transmitted by the terminal device at a fourth position. A third measurement information of the third reference signal and a fourth measurement information of the fourth reference signal are configured to position the terminal device.

In a ninth aspect, a terminal device is provided. The terminal device includes a processor, a memory and a communication interface, the memory is configured to store at least one computer program, and the processor is configured to call the at least one computer program from the memory, so that the terminal device executes the method according to a portion or all of steps in the method according to the first aspect or the third aspect.

In a tenth aspect, a network device is provided. The network device includes a processor, a memory and a communication interface, the memory is configured to store at least one computer program, and the processor is configured to call the at least one computer program from the memory, so that the network device executes the method according to a portion or all of steps in the method according to the second aspect or the fourth aspect.

In an eleventh aspect, a communication system is provided according to an embodiment of the present disclosure. The system includes the terminal device and/or the network device. In another possible design, the system further includes other devices that interact with the terminal device or the network device in the technical solution provided by the embodiment of the present disclosure.

In a twelfth aspect, a computer-readable storage medium is provided. A computer program is stored on the computer-readable storage medium, to cause a communication device (for example, a terminal device or a network device) to execute a portion or all of steps in the method according to any one of the above aspects.

In a thirteenth aspect, a computer program product is provided. The computer program product includes non-transitory computer-readable storage medium storing a computer program, and the computer program is operable to cause a communication device (for example, a terminal device or a network device) to execute a portion or all of steps in the method according to any one of the above aspects. In some implementations, the computer program product is a software installation package.

In a fourteenth aspect, a chip is provided. The chip includes a memory and a processor, and the processor is configured to call a computer program from the memory, to execute a portion or all of steps in the method according to any one of the above aspects.

By using the mobility of the terminal device according to the present disclosure, the terminal device can receive, at different positions, the reference signals transmitted by the same network device, or transmit, at different positions, the reference signals to the same network device, and the receiving phases of the reference signals are configured to position the terminal device. In the positioning process, only one receiving end is involved, that is, the hardware performance of the receiving end is completely consistent, and only one transmitting end is involved, that is, the hardware performance of the transmitting end is completely consistent. Therefore, the technical solutions of the embodiments of the present disclosure are beneficial to improving positioning accuracy.

### BRIEF DESCRIPTION OF THE DRAWINGS

FIG. 1 is a wireless communication system 100 applied to embodiments of the present disclosure.
FIG. 2 is a schematic diagram of estimating a direction of arrival based on an antenna array.
FIG. 3 is a schematic flowchart of a method for positioning provided by an embodiment of the present disclosure.
FIG. 4 is a schematic diagram of determining a multipath number provided by an embodiment of the present disclosure.
FIG. 5 is a schematic flowchart of another method for positioning provided by an embodiment of the present disclosure.
FIG. 6 is a schematic block diagram of a terminal device provided by an embodiment of the present disclosure.
FIG. 7 is a schematic block diagram of a network device provided by an embodiment of the present disclosure.
FIG. 8 is a schematic block diagram of another terminal device provided by an embodiment of the present disclosure.
FIG. 9 is a schematic block diagram of another network device provided by an embodiment of the present disclosure.
FIG. 10 is a schematic block diagram of a communication device provided by an embodiment of the present disclosure.

### DETAILED DESCRIPTION OF THE EMBODIMENTS

The technical solutions in the present disclosure will be described below in conjunction with the accompanying drawings.

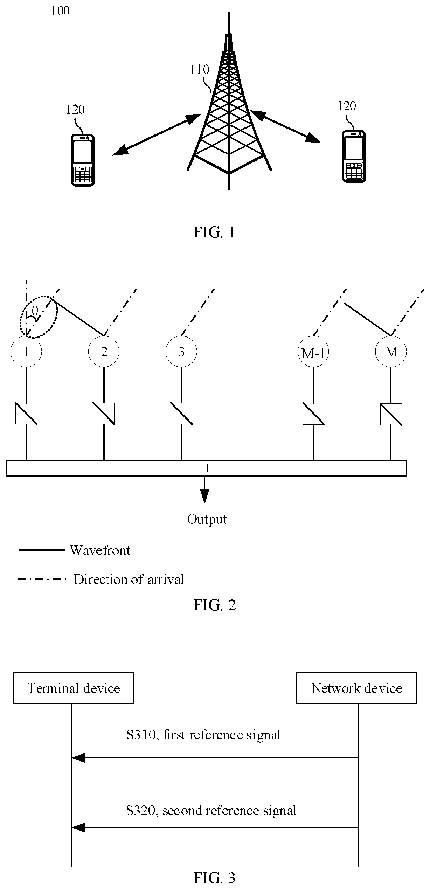

FIG. 1 is a wireless communication system 100 applied to embodiments of the present disclosure. The wireless communication system 100 includes a network device 110 and terminal devices 120. The network device 110 may be a device that communicates with the terminal devices 120. The network device 110 can provide communication coverage for a specific geographical area and can communicate with terminal devices 120 located in the coverage area.

FIG. 1 exemplarily shows one network device and two terminal devices. In some embodiments of the present disclosure, the communication system 100 may include multiple network devices 110, and the coverage area of each network device may include terminal devices with other number, which is not limited by the embodiments of the present disclosure.

In some embodiments, the wireless communication system 100 may further include other network entities such as a network controller and a mobility management entity, which is not limited by the embodiments of the present disclosure.

It should be understood that the technical solution according to the embodiments of the present disclosure can be applied to a 5th-generation (5G) system, a new radio (NR) system, a long term evolution (LTE) system, a LTE frequency division duplex (FDD) system, and a LTE time division duplex (TDD) system. The technical solution according to the embodiments of the present disclosure can be applied to a future communication system, for example, a 6th-generation (6G) mobile communication system, or a satellite communication system.

The terminal device in the embodiments of the present disclosure can also be referred to as user equipment (UE), access terminal, user unit, user station, mobile station (MS), mobile terminal (MT), remote station, remote terminal, mobile device, user terminal, terminal device, wireless communication device, user agent or user device, etc. The terminal device in the embodiments of the present disclosure may be a device that provides voice and/or data connectivity to a user, and may be configured to connect people, things and machines, such as a household appliance with wireless connection function, a vehicle-mounted device, etc. The terminal device in the embodiments of the present disclosure can be a mobile phone, a Pad, a notebook computer, a personal digital assistant, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, and a wireless terminal in smart home, etc. In some embodiments, the UE may act as a base station. For example, the UE may act as a scheduling entity, which provides a sidelink signal between UEs in vehicle-to-everything (V2X) or device-to-device (D2D), etc. For example, a cellular phone and a car communicate with each other using sidelink signals. A cellular phone and a smart home device communicate with each other without relaying communication signals through a base station.

The network device in the embodiments of the present disclosure is a device for communicating with the terminal device. The network device can be referred to as an access network device or a radio access network device. For example, the network device is base station. The network device in the embodiments of the present disclosure can refer to a radio access network (RAN) node (or device) that connects the terminal device to the wireless network. The base station can broadly cover various names as follows, or can be replaced with the following names, such as: NodeB, evolved NodeB (eNB), next generation NodeB (gNB), relay station, access point, transmitting and receiving point (TRP), transmitting point (TP), master evolved NodeB (MeNB), secondary evolved NodeB (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station can be a macro base station, a micro base station, a relay node, a donor node, or the like, or a combination thereof. The base station can also refer to a communication module, a modem, or a chip installed in the aforementioned device or equipment. The base station can also be a mobile switching center, a device that undertakes the functions of a base station in device-to-device (D2D), vehicle-to-everything (V2X), machine-to-machine (M2M) communications, a network-side device in a 6G network, and a device that undertakes the functions of a base station in a future communication system, etc. The base station can support networks with the same or different access technologies. The embodiments of the present disclosure do not limit the specific technology and specific device form adopted by the network device.

The base station can be fixed or mobile. For example, a helicopter or a drone can be configured as a mobile base station, and one or more cells can move according to the position of the mobile base station. In other examples, a helicopter or a drone can be configured as a device to communicate with another base station.

In some examples, the network device according to the embodiments of the present disclosure can be CU or DU, or the network device can include both CU and DU. Alternatively, gNB can further include AAU.

The network device and the terminal device can be deployed on land, including indoors or outdoors, handheld or vehicle-mounted. The network device and the terminal device can be deployed on the water surface. The network device and the terminal device can be deployed on an aircraft, a balloon, or a satellite in the air. The scenarios where the network devices and the terminal devices are located are not limited by the embodiments of the present disclosure.

It should be understood that all or part of the functions of the communication device in the present disclosure can also be implemented by software functions running on hardware, or by virtualization functions instantiated on a platform (such as a cloud platform).

Integrated sensing and communication (ISAC) may refer to the combination of communication and sensing. Sensing is the use of certain means to detect the state of the surrounding environment, such as detecting the position, direction, height, speed, and distance of objects, and determine the shape of objects and even human movements and gestures. In a narrow sense, ISAC refers to a communication system with capabilities such as ranging, speed measurement, angle measurement, imaging, target detection, target tracking, and target recognition, which was also referred to as "integrated radar and communication" in the early days. In a broad sense, however, ISAC refers to a communication system capable of sensing the attributes and states of all services, networks, users, terminals, and environmental objects, and its sensing capabilities can exceed those of conventional radars. As the communication spectrum expands from the conventional Sub6G to millimeter waves, the reduction in wavelength continues to improve sensing capabilities.

ISAC has a wide range of applications. For example, in order to prevent problems such as information leakage, collisions, and noise caused by unauthorized drone flights, low-altitude security systems efficiently and at low cost need to be deployed. At present, although there are various detection solutions in the drone security market, they all face multiple limitations in terms of technology, efficiency, and cost. ISAC can transform multiple base stations in areas requiring low-altitude security deployment into radars. By combining the computing resources in the base stations, a low-altitude security system can be quickly established. As long as a signal can reach the base station, the base station can real-time locate and track intruding drones, and the security system can make subsequent decisions based on the detection results. Conversely, based on the imaging, map construction, and environment reconstruction capabilities provided by ISAC, the system can switch from passive to active mode: deploying drones for reconnaissance, logistics delivery, and other activities. In addition, the system can perform automatic navigation and path planning in unknown environments according to multi-station sensing capabilities. In the internet of vehicles scenario, an ISAC system can real-time perceive traffic flow on roads, so as to realize efficient collaboration between people, vehicles, and roads, ensure traffic safety, and improve the operational efficiency of the transportation system. By making use of the advantages of high placement and wide coverage of the communication base stations, the ISAC system can real-time and extensively sense lane flow and vehicle speed information, and can detect pedestrian or animal intrusions on roads, so as to effectively implement road supervision, ensure traffic safety, and improve traffic efficiency. In smart homes, the following functions can be realized: lights turn on when a person arrives and turn off when the person leaves, switching and controlling any electrical appliance through different gestures, such as virtual piano playing, transmitting notifications to the resident when a danger occurs, such as a child climbing onto a window sill or an elderly person falling down, and triggering a security alarm if someone enters while the resident is away. The system can determine which family member it is by finely monitoring and recognition of gait, and further analyze the time proportion of activities, activity areas, and sleep quality of each family member, such as watching computer, watching TV, sleeping. Further, the system can monitor the climate environment and manage public safety. In the climate environment monitoring scenarios, with the ubiquitous nature of wireless networks, the base station can transmit an ISAC signal in combination with the characteristics of wireless signal fading caused by water molecules, dust, and various chemical substances, to analyze and obtain the variation characteristics of the strength of the ISAC signal, so as to realize real-time monitoring of precipitation, pollutant gas emissions, and air quality. In public safety management, real-time detection by sensing functions can realize early warnings for typhoons, floods, sandstorms, etc., and time can be reserved for disaster prevention in advance. In healthcare, the ISAC systems can achieve high-speed communication, and can effectively realize health monitoring and management. Related art has already realized the monitoring of human respiration and heartbeat by using communication signals. When abnormal respiration or heart rate is detected, early warning information is real-time transmitted back to the user through the communication link, so as to realize real-time monitoring. Terahertz can be used for detecting cancerous tissues and dental caries, and monitoring sweat, tears, saliva, peripheral blood, and tissue fluid.

Sensing includes target detection, such as positioning a target. Positioning includes sensing data related to the target, such as distance, speed, and angle.

Due to differences in the design, optimization objective, and performance evaluation metrics between communication and sensing, a transmission solution that is optimal for communication may not be optimal for sensing, and conversely, a transmission solution that is optimal for sensing may not be optimal for communication. Therefore, in order to achieve ISAC, it is necessary to consider how to combine the two functions at the underlying level, so that the performance losses of both communication and sensing can be relatively small, and the overall design goal can be achieved.

In the current communication network, there are a large number of base stations, and sufficient collaboration can be carried out between the multiple base stations. For example, a sensing signal transmitted by a base station 1, after being reflected by a target object, can be received by a base station 2 for sensing calculations. The processing method can make full use of the positional differences between base stations for target detection, such as estimating a distance and an angle. However, the processing method also increases the complexity of resource coordination between base stations and reduces resource utilization.

In order to ensure that the signal reflected by the target object can be received by the base station 2 without causing interference to the base station 2, the reflected signal needs to be as orthogonal as possible to other signals of the base station 2. When multiple base stations participate in sensing, the number of resource blocks that need to be coordinated and divided on the network side increases, which reduces resource utilization and increase the complexity of resource coordination.

When a single station performs communication and sensing, since the receiving end and the transmitting end share the same clock source, the synchronization between the receiving end and the transmitting end has little impact on sensing. For multi-station sensing, since transmission and reception of a signal are performed by different base stations, clock asynchronization between the base stations significantly affects sensing accuracy. For the communication system, microsecond-level synchronization error between base stations can meet the basic requirements of low-latency and high-reliability communication. However, for ISAC, the positioning accuracy needs to reach at least the meter level or even the decimeter level. A 1-microsecond synchronization error between the receiving base station and the transmitting base station results in a distance sensing error of 300 meters. Therefore, in order to realize multi-station sensing, the synchronization error between base stations needs to be controlled at the nanosecond level or even the picosecond level.

In the ISAC scenario, high requirements are required for the accuracy of position detection of an object. For example, in scenario of operating any electrical appliance through different gestures, the scenario of virtual piano playing, and the scenario of a child climbing a window or an elderly person falling down, high positioning requirements for the detected terminal are required. Moreover, the terminals also have the characteristic of being mobile, which further increases the difficulty of positioning.

The signal processing methods in communication systems includes three types: time domain signal processing, frequency domain signal processing, and spatial domain signal processing. Time domain and frequency domain are reciprocal to each other. Therefore, the time domain processing and the frequency domain processing are interrelated, and the spatial domain processing is relatively independent. In practical applications, an appropriate signal processing method is generally selected according to actual needs.

Time domain processing refers to acquiring desired information by using changes of the signals on the time axis. Time domain processing focuses on the variation of the signals over time and is generally analyzed by observing the waveform diagram of the signal. Time domain processing is more suitable for describing the dynamic characteristics of the signals and changes of time series. Frequency domain processing refers to acquiring desired information, such as signal frequency, by using changes of the signals on the frequency axis. Spatial domain processing describes the spatial characteristics of the signals, and collects signals from multiple paths by arranging multiple antenna elements in space, thereby reducing multipath effects and interference that signals suffer during propagation, and improving the performance of the receiving system. Spatial sampling generally involves sampling spatial domain signals at different positions at the same time.

Taking a linear array as an example, the processing method of spatial domain signals is described below.

Referring to FIG. 2, the antenna array shown in FIG. 2 includes M antennas, all of which can receive signals transmitted by the transmitting end. A direction of arrival can be estimated based on the signals received by two antennas. In the solution shown in FIG. 2, the wavefront received by the antennas is perpendicular to the direction of arrival. According to the far-field electromagnetic wave principle, the received signals of different antennas at the wavefront are the same. A length at the ellipse in FIG. 2 represents a path difference between the received signals of antenna 1 and antenna 2. The calculation formula of the path difference is as follows: ${d}_{D} = 2 π \frac{Δφ}{λ}$

d*_{D}* represents a path difference, λ represents a wavelength, and Δφ represents a phase difference.

In array signal processing, multiple antennas sample signals at the same time, and the sampling is referred to as a snapshot sampling. In order to ensure the phase correlation between different antennas and that the spatially sampled signals comply with the Nyquist law of spatial sampling, a snapshot sampling requires that the spacing between antennas is less than half a wavelength. In this case, the channels corresponding to two adjacent antennas can be considered coherent.

According to the principle of positioning geometry, current positioning systems determine the position of an object by measuring the distance between the object and reference points. For example, when a terminal measures signals of different transmitting devices (such as transmitters) for positioning, transmitting devices at different positions are required to transmit the signals. Alternatively, when a terminal transmits signals that are received by different receiving devices (such as receivers) for positioning, receiving devices at different positions are required to receive the signals. It can be seen from the above that when a terminal device is positioned, the results between the terminal and at least two reference points need to be measured.

There are two methods to measure the distance between an object and a reference point. One method is to determine the distance based on the time difference between the object and the reference point, and the other method is to determine the distance based on the phase difference between the object and the reference point. The two methods are described respectively as follows.

When an object is positioned, the distance between the object and a reference point can be measured based on the flight time of the signal. Positioning is performed using the time difference in transmission time of the signal between the object and different reference points. Time difference ranging calculates distances by measuring the time difference required for a signal to travel from different transmitting devices to a receiving device, or from a transmitting device to different receiving devices. The distance difference can be obtained by multiplying the time difference by the speed of light.

Phase difference ranging can calculate distances based on the phase difference of the propagating signal. When the transmitting signal reaches the receiving device, due to the different distances from different transmitting devices to the receiving device, or the different distances from the same transmitting device to different receiving devices, the signals received by the receiving device have a phase difference. By measuring the phase difference, the distance difference from different transmitting devices to the receiving device, or from the same transmitting device to different receiving devices, can be inferred. Phase difference ranging is commonly used in radar systems, communication systems, and some precision ranging devices. In a global positioning system (GPS), the phase difference between the satellites and the receiving device is configured to calculate the distance from the receiving device to the satellites.

Both ranging systems based on phase difference and ranging systems based on time difference have high requirements for the synchronization of signals between different devices. For example, in scenarios where the receiving end receives signals transmitted by different transmitting ends for positioning, the clocks of different transmitting ends need to be synchronized, and high requirements for the consistency of hardware performance (such as hardware processing delay) among different transmitting ends are required. For another example, in scenarios where different receiving ends receive signals transmitted by the transmitting end for positioning, the clocks of different receiving ends need to be synchronized, and high requirements for the consistency of hardware performance (such as hardware processing delay) among the receiving ends are required.

In order to reduce the requirements for the consistency of hardware performance of the device, the embodiment of the present disclosure proposes that the terminal device can be configured as different transmitting devices or receiving devices at different positions by using the mobility of the terminal device. For example, the terminal device can receive, at different positions, reference signals transmitted by a network device, or transmit, at different positions, reference signals to the network device. Since only one transmitting device and one receiving device are involved in the process, that is, the hardware performance of the transmitting device is completely consistent, and the hardware performance of the receiving device is completely consistent, errors caused by the hardware of the transmitting device or the receiving device can be eliminated by processing the measurement information of the reference signals. For example, hardware phase errors of the device can be eliminated through phase differences, or clock errors of the device can be eliminated through time differences. Therefore, the technical solution of the embodiments of the present disclosure can improve positioning accuracy.

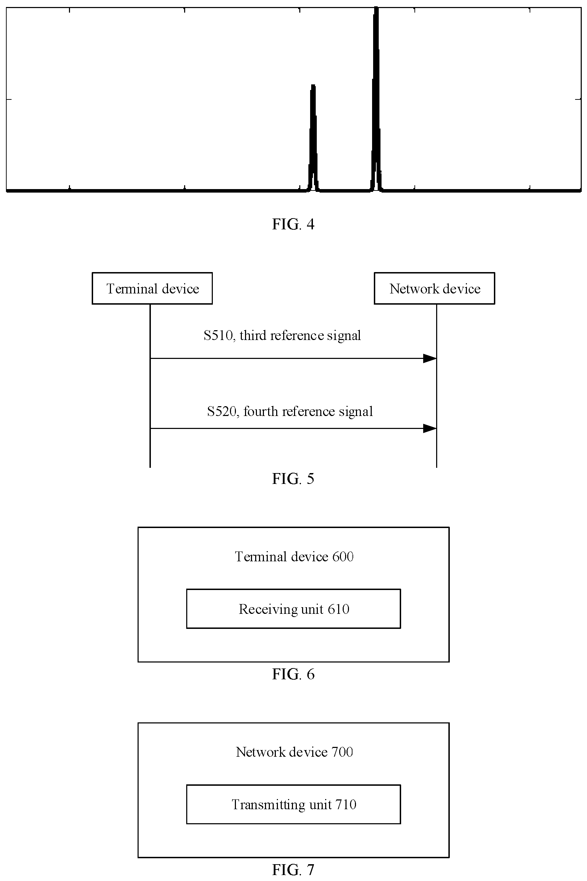

The technical solution of the embodiment of the present disclosure will be described in detail below with reference to FIG. 3 and FIG. 4. The technical solution shown in FIG. 3 is described from the perspective of the terminal device as a receiving device, and FIG. 4 is described from the perspective of the terminal device as a transmitting device. The relevant contents in FIG. 3 and FIG. 4 can be combined with each other, which is not specifically limited by the embodiments of the present disclosure.

### First Embodiment

Referring to FIG. 3, in step S310, receiving, by the terminal device at a first position, a first reference signal transmitted by the network device. In other words, transmitting, by the network device, a first reference signal to the terminal device at a first position.

In step 320, receiving, by the terminal device at a second position, a second reference signal transmitted by the network device. In other words, transmitting, by the network device, a second reference signal to the terminal device at a second position.

The terminal device may be any type of the terminal devices described above. In some embodiments, the terminal device is a terminal device in ICAS. The network device may be any type of the network devices described above. In some embodiments, the network device is a base station.

The first reference signal may be any type of downlink signal. In some embodiments, the first reference signal is a positioning reference signal (PRS). In other embodiments, the first reference signal is a pilot signal.

The second reference signal may be any type of downlink signal. In some embodiments, the second reference signal is a PRS. In other embodiments, the second reference signal is a pilot signal.

In some embodiments, the first reference signal and the second reference signal may be sensing signals. For example, the first reference signal and the second reference signal may be bird sound signals that facilitate sensing.

The first reference signal and the second reference signal may be reference signals transmitted by the network device at different moments. For example, the network device transmits the first reference signal to the terminal device when the terminal device is at the first position. The network device transmits the second reference signal to the terminal device when the terminal device is at the second position. The first position and the second position are different.

In some embodiments, the terminal device receives the first reference signal when the terminal device moves to the first position. The terminal device receives the second reference signal when the terminal device moves to the second position.

In some embodiments, the first position and the second position may be fixed positions, or the distance between the first position and the second position may be a preset distance. For example, regardless of the absolute positions of the first position and the second position, it is sufficient that the distance between the first position and the second position is the preset distance.

Since different positions correspond to different receiving moments, the terminal device receiving the first reference signal at the first position can be understood as the terminal device receiving the first reference signal at a first moment, and the terminal device receiving the second reference signal at the second position can be understood as the terminal device receiving the second reference signal at a second moment. The first moment and the second moment are different.

In some embodiments, the first reference signal and the second reference signal are of the same type. For example, the first reference signal and the second reference signal are reference signals transmitted by the network device to the terminal device at different moments.

In some embodiments, a first measurement information of the first reference signal and a second measurement information of the second reference signal are configured to position the terminal device. The terminal device can receive the first reference signal transmitted by the network device at the first position and measure the first reference signal to acquire the first measurement information. The terminal device can receive the second reference signal transmitted by the network device at the second position and measure the second reference signal to acquire the second measurement information.

The first measurement information and the second measurement information may be phase information or time information. If the first measurement information and the second measurement information are phase information, the phase difference can be used to position the terminal device. If the first measurement information and the second measurement information are time information, the time difference can be used to position the terminal device. The two cases are described respectively as follows.

In some embodiments, the first measurement information and the second measurement information are phase information. For example, the first measurement information is a first receiving phase, and the second measurement information is a second receiving phase. If the receiving phase of the first reference signal is the first receiving phase and the receiving phase of the second reference signal is the second receiving phase, the phase difference between the first receiving phase and the second receiving phase is used to position the terminal device. The first receiving phase and the second receiving phase reflect a distance difference from the terminal device at the two positions to the network device, and the positioning device can realize the positioning of the terminal device by using the distance difference. When the terminal device measures the phases, since both the first receiving phase and the second receiving phase are measured by the same device (i.e., the terminal device), subtracting the phases can eliminate the phase error caused by the hardware delay of the terminal device, thereby improving the positioning accuracy.

In some embodiments, the first measurement information and the second measurement information are time information. For example, the first measurement information is a first receiving moment, and the second measurement information is a second receiving moment. If the receiving moment of the first reference signal is the first receiving moment and the receiving moment of the second reference signal is the second receiving moment, the time difference between the first receiving moment and the second receiving moment is used to position the terminal device. The first receiving moment and the second receiving moment reflect the distance difference from the terminal device at the two positions to the network device, and the positioning device can realize the positioning of the terminal device by using the distance difference. When the terminal device measures the receiving moments, since both the first receiving moment and the second receiving moment are measured by the same device (i.e., the terminal device), subtracting the receiving moments can eliminate the time error caused by the hardware delay of the terminal device, thereby improving the positioning accuracy.

In some embodiments, in order to ensure that the terminal device accesses the same network device (such as a base station or a cell) at different positions, for example, in order to prevent the terminal device from moving from one cell to another cell, a time interval between the receiving moment of the first reference signal and the receiving moment of the second reference signal is limited. For example, the time interval between the receiving moment of the first reference signal and the receiving moment of the second reference signal is less than or equal to a first preset duration.

If the time interval between the receiving moment of the first reference signal and the receiving moment of the second reference signal is too long, the terminal device may have undergone a cell handover. In this case, the first reference signal and the second reference signal are transmitted by different cells, and the hardware delays of different cells are inconsistent, which affects the positioning result. Taking the positioning method based on phase difference technology as an example, the phase difference cannot eliminate hardware differences between different network devices, and the positioning result acquired using the phase difference is inaccurate. Therefore, the configuration of the first preset duration in the embodiment of the present disclosure ensures that the reference signals received by the terminal device within the first preset duration are transmitted by the same network device.

In some embodiments, the first preset duration may be a pre-configured duration, a duration predefined by a protocol, or a duration configured by the network device for the terminal device.

In some embodiments, the network device configures a transmission resource of the reference signal for the terminal device, so that the terminal device receives the reference signal on the transmission resource. For example, the network device transmits first configuration information to the terminal device, where the first configuration information is configured to configure a transmission resource of the first reference signal and/or a transmission resource of the second reference signal.

In some embodiments, the transmission resource may include a time domain resource and/or a frequency domain resource.

In some embodiments, the transmission resource includes time information for transmitting the first reference signal and/or the second reference signal. For example, if the transmission resource includes the time domain resource, the time domain resource indicates the time information for transmitting the first reference signal and/or the second reference signal. In this way, the network device can implicitly indicate the first preset duration through the transmission resource. For example, if the first configuration information is configured to configure the time domain resource of the first reference signal and the time domain resource of the second reference signal, the terminal device can determine the receiving moment of the first reference signal and the receiving moment of the second reference signal based on the first configuration information, and the first preset duration is the time difference between the receiving moment of the first reference signal and the receiving moment of the second reference signal.

In some embodiments, the terminal device transmits first information to the positioning device, so that the positioning device can position the terminal device based on the first information. The first information includes one or more of the following: the first measurement information, the second measurement information, and the difference between the first measurement information and the second measurement information.

For example, assuming that the measurement information is time information, the first information includes one or more of the following: the first receiving moment of the first reference signal, the second receiving moment of the second reference signal, and the time difference between the first receiving moment and the second receiving moment.

For another example, assuming that the measurement information is receiving phases, the first information includes one or more of the following: the first receiving phase, the second receiving phase, and the phase difference between the first receiving phase and the second receiving phase. In some embodiments, in order to ensure that the positioning device can acquire the position information of the terminal device at a certain moment, the terminal device transmits information related to the receiving moment of the reference signal to the positioning device. For example, the first information includes one or more of the following: the first receiving phase of the first reference signal, the second receiving phase of the second reference signal, the phase difference between the first receiving phase and the second receiving phase, the first receiving moment of the first reference signal, the second receiving moment of the second reference signal, and the time difference between the first receiving moment and the second receiving moment.

In some embodiments, if the phase difference is calculated by the terminal device, the first information may include the phase difference but not the first receiving phase and the second receiving phase. For example, the terminal device transmits the phase difference to the positioning device, so that the positioning device can position the terminal device based on the phase difference. If the phase difference is calculated by the positioning device, the first information may include the first receiving phase and the second receiving phase but not the phase difference. For example, the terminal device transmits the first receiving phase and the second receiving phase to the positioning device, and the positioning device can calculate the phase difference between the first receiving phase and the second receiving phase after receiving the first receiving phase and the second receiving phase, to further position the terminal device based on the phase difference.

In some embodiments, the terminal device transmits the first receiving moment and the second receiving moment to the positioning device. Alternatively, the terminal device transmits the time difference between the first receiving moment and the second receiving moment to the positioning device. Alternatively, the terminal device transmits the first receiving moment and the time difference between the first receiving moment and the second receiving moment to the positioning device. Alternatively, the terminal device transmits the second receiving moment, and the time difference between the first receiving moment and the second receiving moment to the positioning device. In some embodiments, the terminal device transmits the first receiving moment, the second receiving moment, and the time difference between the first receiving moment and the second receiving moment to the positioning device.

Since the terminal device is in a moving state, the terminal device transmits information related to the receiving moment of the reference signal to the positioning device, so that the positioning device can determine the position of the terminal device at which moment when determining the position of the terminal device. For example, the positioning device can determine a position of the terminal device at a first moment and/or a position of the terminal device at a second moment.

The positioning device in the embodiments of the present disclosure may be a unit with a positioning calculation function. The positioning device may be a positioning server, a location management function (LMF), a serving cell, a positioning reference unit, or a terminal device.

In some embodiments, the terminal device receives reference signals transmitted by multiple network devices. The network device mentioned above may be one of the multiple network devices.

For example, assuming that the multiple network devices include network device 1 and network device 2, the terminal device may receive reference signal 1 transmitted by network device 1 and reference signal 2 transmitted by network device 2 at position 1, and receive reference signal 3 transmitted by network device 1 and reference signal 4 transmitted by network device 2 at position 2. The receiving phase of reference signal 1 is phase 1, the receiving phase of reference signal 2 is phase 2, the receiving phase of reference signal 3 is phase 3, and the receiving phase of reference signal 4 is phase 4. The phase difference between phase 3 and phase 1, and the phase difference between phase 4 and phase 2, are used to position the terminal device. The positioning device can position the terminal device based on the phase difference between phase 3 and phase 1 and the phase difference between phase 4 and phase 2.

Taking two network devices as an example, the positioning process of the terminal device is described above, but the embodiments of the present disclosure are not limited thereto. The network devices in the embodiments of the present disclosure may include a larger number, such as three or four network devices.

During transmission, the reference signal may form multiple propagation paths due to reflection, refraction, scattering, etc., resulting in the superposition of multiple signals when the signal reaches the terminal device, thereby forming a multipath signal. The multipath number of a reference signal indicates the interference degree of the reference signal. The larger the multipath number of the reference signal is, the more severe the interference degree of the reference signal is. In some embodiments, before the terminal device transmits the first information to the positioning device, the terminal device may determine the first multipath number of the first reference signal and/or the second multipath number of the second reference signal. If the multipath number of the reference signal is greater than a first threshold, it indicates that the reference signal is no longer suitable for phase difference processing. In this case, the terminal device may not transmit the first information to the positioning device, so as to save signaling overhead.

In some embodiments, the terminal device may transmit the first information to the positioning device when the first multipath number and/or the second multipath number is less than or equal to the first threshold. For example, the terminal device transmits the first information to the positioning device when the first multipath number is less than the first threshold. For another example, the terminal device transmits the first information to the positioning device when the second multipath number is less than the first threshold. For another example, the terminal device transmits the first information to the positioning device when both the first multipath number and the second multipath number are less than the first threshold.

The first threshold may be determined based on the positioning accuracy of the terminal device. If the terminal device has higher requirements for positioning accuracy, the first threshold may be set relatively small. If the terminal device has lower requirements for positioning accuracy, the first threshold may be set relatively large.

The multipath number of the reference signal can be determined by the terminal device. When the terminal device performs phase measurement on the reference signal, it can determine the multipath number according to the intermediate results of the phase measurement. One determination method is a pseudo-spectrum-based method. Referring to FIG. 4, FIG. 4 shows a method for determining the multipath number based on pseudo-spectrum, each pulse in FIG. 4 corresponds to one path.

In some embodiments, the positioning device can position the terminal device based on the phase difference between the first receiving phase and the second receiving phase. The calculation formula of the phase difference is as follows: $Δφ = {φ}_{f} \left(t1\right) - {φ}_{f} \left(t2\right)$

Alternatively, the calculation formula of the phase difference is as follows: $Δφ = {φ}_{f} \left(t2\right) - {φ}_{f} \left(t1\right)$

Δφ represents the phase difference, t1 represents the measurement moment at the first position, t2 represents the measurement moment at the second position, *φ_{f}*(*t*1) represents the phase measured at the first position, and *φ_{f}* (t2) represents the phase measured at the second position.

In other embodiments, the positioning device may construct a first vector using the first receiving phase and the second receiving phase, such as constructing a vector matrix, and then use the vector matrix to position the terminal device.

In some embodiments, when the positioning device determines the position of the terminal device based on the phase difference, the phase difference cannot be accurately determined caused by integer wavelength ambiguity of the signal during propagation. Based on this, the embodiments of the present disclosure can use signals of multiple frequencies for measurement, so as to resolve the problem of integer wavelength ambiguity. For example, the network device transmits reference signals of different frequencies to the terminal device, so that the terminal device measures the reference signals of different frequencies to acquire phases corresponding to the reference signals of different frequencies. Each frequency signal among the multiple frequency signals has a different wavelength, and each reference signal has different multiples at different frequencies. By using the reference signals of multiple frequencies, the capability to resolve integer wavelength ambiguity can be improved.

As can be seen from the above description of FIG. 2, when the distance between two adjacent antennas is less than half a wavelength, it can be considered that the channels corresponding to the two adjacent antennas are coherent. Corresponding to the technical solution of the present disclosure, during the movement of the terminal device, the distance between the first position and the second position is much larger than the wavelength, which does not meet the condition of channel coherence. However, when the signals received by the terminal device at the first position and the second position are both line-of-sight signals or near line-of-sight signals, it can be considered that the channels from the terminal device at the two positions to the same network device are coherent. Therefore, the wave path difference described in FIG. 2 can be used to determine the position of the terminal device.

Under the carrier spacing f, the received signal is modeled with the following formula: ${y}_{f} \left(t\right) = {p}_{f} \left(t\right) {e}^{j {φ}_{f} \left(t\right)} {s}_{f} \left(t\right) + {n}_{f} \left(t\right)$

*y_{f}*(*t*) represents the signal received at time t, *p_{f}*(*t*)*e*^{j*φ_{f}*(*t*)} represents the channel fading under carrier spacing f, *s_{f}*(*t*) represents a transmitted signal, and *n_{f}*(*t*) represents signal noise.

In some embodiments, before performing positioning calculation for the terminal device using the first measurement information and the second measurement information, whether the distance between the terminal device and the network device is a line-of-sight distance may be determined. If the distance between the terminal device and the network device is a line-of-sight distance, the first measurement information and the second measurement information can be used to perform positioning calculation for the terminal device. For example, the positioning device may perform positioning calculation for the terminal device using the first measurement information and the second measurement information. If the distance between the terminal device and the network device is a non-line-of-sight distance, the first measurement information and the second measurement information cannot be used to perform positioning calculation for the terminal device.

In some embodiments, if the first measurement information and the second measurement information are phase information, that is, the first measurement information is the first receiving phase and the second measurement information is the second receiving phase, the distance between the terminal device and the network device is a line-of-sight distance when the first formula is satisfied.

The first formula is as follows: $ω \approx 2 π ⋅ mod \left(vΔt cos ∅,λ\right) / λ$

ω represents the phase difference between the first receiving phase and the second receiving phase, *v* represents a moving speed of the terminal device, Δ*t* represents a time interval for the terminal device to move from the first position to the second position, 0̸ represents an angle between a line connecting a position of the network device and the first position, and a moving direction of the terminal device, mod represents a modulo operation, and λ represents a wavelength of the first reference signal. The formula means converting the distance difference *v*Δ*t* cos 0̸ between a distance from the first position to the base station and a distance from the second position to the base station into a phase difference, and determining whether the converted phase difference is close to the measured phase difference ω.

### Second Embodiment

Referring to FIG. 5, in step S510, transmitting, by the terminal device at a third position, a third reference signal to the network device. In other words, receiving, by the network device, a third reference signal transmitted by the terminal device at a third position.

In step S520, transmitting, by the terminal device at a fourth position, a fourth reference signal to the network device. In other words, receiving, by the network device, a fourth reference signal transmitted by the terminal device at a fourth position.

The terminal device may be any type of the terminal devices described above. In some embodiments, the terminal device is a terminal device in ICAS. The network device may be any type of the network devices described above. In some embodiments, the network device is a base station.

The third reference signal may be any type of uplink signal. In some embodiments, the third reference signal is a demodulation reference signal (DM-RS) or a sounding reference signal (SRS).

The fourth reference signal may be any type of uplink signal. In some embodiments, the fourth reference signal is a DM-RS or an SRS.

In some embodiments, the third reference signal and the fourth reference signal may be sensing signals. For example, the third reference signal and the fourth reference signal may be bird sound signals that facilitate sensing.

The third reference signal and the fourth reference signal may be reference signals transmitted by the terminal device at different moments. For example, the terminal device transmits the third reference signal to the network device when the terminal device is at the third position. The terminal device transmits the fourth reference signal to the network device when the terminal device is at the fourth position. The third position and the fourth position are different.

In some embodiments, the terminal device transmits the third reference signal when the terminal device moves to the third position. The terminal device transmits the fourth reference signal when the terminal device moves to the fourth position.

In some embodiments, the third position and the fourth position may be fixed positions, or the distance between the third position and the fourth position may be a preset distance. For example, regardless of the absolute positions of the third position and the fourth position, it is sufficient that the distance between the third position and the fourth position is the preset distance.

Since different positions correspond to different transmitting moments, the terminal device transmitting the third reference signal at the third position can be understood as the terminal device transmitting the third reference signal at a third moment, and the terminal device transmitting the fourth reference signal at the fourth position can be understood as the terminal device receiving the fourth reference signal at a fourth moment. The third moment and the fourth moment are different.

In some embodiments, the third reference signal and the fourth reference signal are of the same type. For example, the third reference signal and the fourth reference signal are reference signals transmitted by the terminal device to the network device when the terminal device is at different moments.

In some embodiments, a third measurement information of the third reference signal and a fourth measurement information of the fourth reference signal are used to position the terminal device. The terminal device can transmit the third reference signal to the network device when the terminal device is at the third position, and the network device can measure the third reference signal to acquire the third measurement information. The terminal device can transmit the fourth reference signal to the network device when the terminal device is at the fourth position, and the network device can measure the fourth reference signal to acquire the fourth measurement information.

The third measurement information and the fourth measurement information may be phase information or time information. If the third measurement information and the fourth measurement information are phase information, the phase difference can be used to position the terminal device. If the third measurement information and the fourth measurement information are time information, the time difference can be used to position the terminal device. The two cases are described respectively as follows.

In some embodiments, the third measurement information and the fourth measurement information are phase information. For example, the third measurement information is a third receiving phase, and the fourth measurement information is a fourth receiving phase. If the receiving phase of the third reference signal is the third receiving phase and the receiving phase of the fourth reference signal is the fourth receiving phase, the phase difference between the third receiving phase and the fourth receiving phase is used to position the terminal device. It can be understood that the third receiving phase is a signal phase when the network device receives the third reference signal, and the fourth receiving phase is a signal phase when the network device receives the fourth reference signal. The third receiving phase and the fourth receiving phase reflect a distance difference from the terminal device at the two positions to the network device, and the positioning device can realize the positioning of the terminal device by using the distance difference. When the network device measures the phases, since both the third receiving phase and the fourth receiving phase are measured by the same device (i.e., the network device), subtracting the phases can eliminate the phase error caused by the hardware delay of the network device, thereby improving the positioning accuracy.

In some embodiments, the third measurement information and the fourth measurement information are time information. For example, the third measurement information is a third receiving moment, and the fourth measurement information is a fourth receiving moment. If the receiving moment of the third reference signal is the third receiving moment and the receiving moment of the fourth reference signal is the fourth receiving moment, the time difference between the third receiving moment and the fourth receiving moment is used to position the terminal device. The third receiving moment and the fourth receiving moment reflect the distance difference from the terminal device at the two positions to the network device, and the positioning device can realize the positioning of the terminal device by using the distance difference. When the terminal device measures the receiving moments, since both the third receiving moment and the fourth receiving moment are measured by the same device (i.e., the network device), subtracting the receiving moments can eliminate the time error caused by the hardware delay of the terminal device, thereby improving the positioning accuracy.

In some embodiments, in order to ensure that the terminal device accesses the same network device (such as a base station or a cell) at different positions, for example, in order to prevent the terminal device from moving from one cell to another cell, a time interval between a transmitting moment of the third reference signal and a transmitting moment of the fourth reference signal is limited. For example, the time interval between the transmitting moment of the third reference signal and the transmitting moment of the fourth reference signal is less than or equal to a second preset duration.

If the time interval between the transmitting moment of the third reference signal and the transmitting moment of the fourth reference signal is too long, the terminal device may have undergone a cell handover. In this case, the third reference signal and the fourth reference signal are transmitted by the terminal device to different cells, and the hardware delays of different cells are inconsistent, which affects the positioning result. Taking the positioning method based on phase difference technology as an example, the phase difference cannot eliminate hardware differences between different network devices, and the positioning result acquired using the phase difference is inaccurate. Therefore, the configuration of the second preset duration in the embodiment of the present disclosure ensures that the terminal device transmits reference signals to the same network device within the second preset duration.

In some embodiments, the second preset duration may be a pre-configured duration, a duration predefined by a protocol, or a duration configured by the network device for the terminal device.

In some embodiments, the network device configures a transmission resource of the reference signal for the terminal device, so that the terminal device transmits the reference signal on the transmission resource. For example, the network device transmits second configuration information to the terminal device, where the second configuration information is configured to configure a transmission resource of the third reference signal and/or a transmission resource of the fourth reference signal.

In some embodiments, the transmission resource may include a time domain resource and/or a frequency domain resource.

In some embodiments, the transmission resource includes time information for transmitting the third reference signal and/or the second reference signal. For example, if the transmission resource includes the time domain resource, the time domain resource indicates the time information for transmitting the third reference signal and/or the fourth reference signal. In this way, the network device can implicitly indicate the second preset duration through the transmission resource. For example, if the second configuration information is configured to configure the time domain resource of the third reference signal and the time domain resource of the fourth reference signal, the terminal device can determine the transmitting moment of the third reference signal and the transmitting moment of the fourth reference signal based on the second configuration information, and the second preset duration is the time difference between the transmitting moment of the third reference signal and the transmitting moment of the fourth reference signal.

In some embodiments, the terminal device transmits second information to the positioning device, so that the positioning device can position the terminal device based on the second information. The second information includes one or more of the following: the first transmitting moment of the third reference signal, the second receiving moment of the fourth reference signal, and the time difference between the first transmitting moment and the second transmitting moment.

In some embodiments, the terminal device transmits the first transmitting moment and the second transmitting moment to the positioning device. Alternatively, the terminal device transmits the time difference between the first transmitting moment and the second transmitting moment to the positioning device. Alternatively, the terminal device transmits the first transmitting moment and the time difference between the first transmitting moment and the second transmitting moment to the positioning device. Alternatively, the terminal device transmits the second transmitting moment, and the time difference between the first transmitting moment and the second transmitting moment to the positioning device. In some embodiments, the terminal device transmits the first transmitting moment, the second transmitting moment, and the time difference between the first transmitting moment and the second transmitting moment to the positioning device.

Since the terminal device is in a moving state, the terminal device transmits information related to the transmitting moment of the reference signal to the positioning device, so that the positioning device can determine the position of the terminal device at which moment when determining the position of the terminal device. For example, the positioning device can determine a position of the terminal device at a third moment and/or a position of the terminal device at a fourth moment.

In some embodiments, the terminal device transmits the second information to the positioning device through the network device. For example, the terminal device transmits the second information to the network device, and the network device transmits the second information to the positioning device.

It can be seen from the above that, the network device acquires the third receiving phase by measuring the third reference signal, and acquires the fourth receiving phase by measuring the fourth reference signal. In some embodiments, the network device transmits third information to the positioning device, and the third information includes one or more of the following: the third measurement information, the fourth measurement information, and the difference between the third measurement information and the fourth measurement information.

For example, assuming that the measurement information is time information, the third information includes one or more of the following: the third receiving moment of the third reference signal, the fourth receiving moment of the fourth reference signal, and the time difference between the third receiving moment and the fourth receiving moment.

For another example, assuming that the measurement information is receiving phases, the third information includes one or more of the following: the third receiving phase, the fourth receiving phase, and the phase difference between the third receiving phase and the fourth receiving phase.

In some embodiments, if the phase difference is calculated by the network device, the third information may include the phase difference but not the third receiving phase and the fourth receiving phase. For example, the network device transmits the phase difference to the positioning device, so that the positioning device can position the terminal device based on the phase difference. If the phase difference is calculated by the positioning device, the third information may include the third receiving phase and the fourth receiving phase but not the phase difference. For example, the network device transmits the third receiving phase and the fourth receiving phase to the positioning device, and the positioning device can calculate the phase difference between the third receiving phase and the fourth receiving phase after receiving the third receiving phase and the fourth receiving phase, to further position the terminal device based on the phase difference.

The positioning device in the embodiments of the present disclosure may be a unit with a positioning calculation function. The positioning device may be a positioning server, a location management function (LMF), a serving cell, a positioning reference unit, or a terminal device.

In some embodiments, the terminal device transmits reference signals to multiple network devices. The network device mentioned above may be one of the multiple network devices.

For example, assuming that the multiple network devices include network device 1 and network device 2, the terminal device may transmit reference signal 1 to network device 1 and reference signal 2 to network device 2 when the terminal device is at position 1, and transmit reference signal 3 to network device 1 and reference signal 4 to network device 2 when the terminal device is at position 2. The receiving phase of reference signal 1 received by network device 1 is phase 1, the receiving phase of reference signal 2 received by network device 2 is phase 2, the receiving phase of reference signal 3 received by network device 1 is phase 3, and the receiving phase of reference signal 4 received by network device 2 is phase 4. The phase difference between phase 3 and phase 1, and the phase difference between phase 4 and phase 2, are used to position the terminal device. The positioning device can position the terminal device based on the phase difference between phase 3 and phase 1 and the phase difference between phase 4 and phase 2.

Taking two network devices as an example, the positioning process of the terminal device is described above, but the embodiments of the present disclosure are not limited thereto. The network devices in the embodiments of the present disclosure may include a larger number, such as three or four network devices.

During transmission, the reference signal may form multiple propagation paths due to reflection, refraction, scattering, etc., resulting in the superposition of multiple signals when the signal reaches the network device, thereby forming a multipath signal. The multipath number of a reference signal indicates the interference degree of the reference signal. The larger the multipath number of the reference signal is, the more severe the interference degree of the reference signal is. In some embodiments, before the network device transmits the third information to the positioning device, the network device may determine the third multipath number of the third reference signal and/or the fourth multipath number of the fourth reference signal. If the multipath number of the reference signal is greater than a second threshold, it indicates that the reference signal is no longer suitable for phase difference processing. In this case, the network device may not transmit the third information to the positioning device, so as to save signaling overhead.

In some embodiments, the network device may transmit the third information to the positioning device when the third multipath number and/or the fourth multipath number is less than or equal to the second threshold. For example, the network device transmits the third information to the positioning device when the third multipath number is less than the second threshold. For another example, the network device transmits the third information to the positioning device when the fourth multipath number is less than the second threshold. For another example, the network device transmits the third information to the positioning device when both the third multipath number and the fourth multipath number are less than the second threshold.

The second threshold may be determined based on the positioning accuracy of the terminal device. If the terminal device has higher requirements for positioning accuracy, the second threshold may be set relatively small. If the terminal device has lower requirements for positioning accuracy, the second threshold may be set relatively large.

The multipath number of the reference signal can be determined by the network device. When the network device performs phase measurement on the reference signal, it can determine the multipath number according to the intermediate results of the phase measurement. One determination method is a pseudo-spectrum-based method. Referring to FIG. 4, FIG. 4 shows a method for determining the multipath number based on pseudo-spectrum, each pulse in FIG. 4 corresponds to one path.

In some embodiments, the positioning device can position the terminal device based on the phase difference between the third receiving phase and the fourth receiving phase. The calculation formula of the phase difference is as follows: $Δφ = {φ}_{f} \left(t3\right) - {φ}_{f} \left(t4\right)$

Alternatively, the calculation formula of the phase difference is as follows: $Δφ = {φ}_{f} \left(t4\right) - {φ}_{f} \left(t3\right)$

Δφ represents the phase difference, t3 represents the measurement moment at the third position, t4 represents the measurement moment at the fourth position, φ*_{f}*(*t*3) represents the phase measured at the third position, and φ*_{f}*(*t*4)represents the phase measured at the fourth position.

In other embodiments, the positioning device may construct a second vector using the third receiving phase and the fourth receiving phase, such as constructing a vector matrix, and then use the vector matrix to position the terminal device.

In some embodiments, when the positioning device determines the position of the terminal device based on the phase difference, the phase difference cannot be accurately determined caused by integer wavelength ambiguity of the signal during propagation. Based on this, the embodiments of the present disclosure can use signals of multiple frequencies for measurement, so as to resolve the problem of integer wavelength ambiguity. For example, the terminal device transmits reference signals of different frequencies to the network device, so that the network device measures the reference signals of different frequencies to acquire phases corresponding to the reference signals of different frequencies. Each frequency signal among the multiple frequency signals has a different wavelength, and each reference signal has different multiples at different frequencies. By using the reference signals of multiple frequencies, the capability to resolve integer wavelength ambiguity can be improved.

As can be seen from the above description of FIG. 2, when the distance between two adjacent antennas is less than half a wavelength, it can be considered that the channels corresponding to the two adjacent antennas are coherent. Corresponding to the technical solution of the present disclosure, during the movement of the terminal device, the distance between the third position and the fourth position is much larger than the wavelength, which does not meet the condition of channel coherence. However, when the signals transmitted by the terminal device at the third position and the fourth position are both line-of-sight signals or near line-of-sight signals, it can be considered that the channels from the terminal device at the two positions to the same network device are coherent. Therefore, the wave path difference described in FIG. 2 can be used to determine the position of the terminal device.

Under the carrier spacing f, the received signal is modeled with the following formula: ${y}_{f} \left(t\right) = {p}_{f} \left(t\right) {e}^{j {φ}_{f} \left(t\right)} {s}_{f} \left(t\right) + {n}_{f} \left(t\right)$

y*_{f}*(*t*)represents the signal received at time t, p*_{f}*(*t*)e^{jφ*_{f}*(*t*)}represents the channel fading under carrier spacing f, s*_{f}*(*t*)represents a transmitted signal, and *n_{f}*(*t*) represents signal noise.

In some embodiments, before performing positioning calculation for the terminal device using the third measurement information and the fourth measurement information, whether the distance between the terminal device and the network device is a line-of-sight distance may be determined. If the distance between the terminal device and the network device is a line-of-sight distance, the third measurement information and the fourth measurement information can be used to perform positioning calculation for the terminal device. For example, the positioning device may perform positioning calculation for the terminal device using the third measurement information and the fourth measurement information. If the distance between the terminal device and the network device is a non-line-of-sight distance, the third measurement information and the fourth measurement information cannot be used to perform positioning calculation for the terminal device.

In some embodiments, if the third measurement information and the fourth measurement information are phase information, that is, the third measurement information is the third receiving phase and the fourth measurement information is the fourth receiving phase, the distance between the terminal device and the network device is a line-of-sight distance when the second formula is satisfied.

The second formula is as follows: $ω \approx 2 π ⋅ mod \left(vΔt cos ∅,λ\right) / λ$

ω represents the phase difference between the third receiving phase and the fourth receiving phase, *v* represents a moving speed of the terminal device, Δ*t* represents a time interval for the terminal device to move from the third position to the fourth position, 0̸ represents an angle between a line connecting a position of the network device and the third position, and a moving direction of the terminal device, mod represents a modulo operation, and λ represents a wavelength of the third reference signal.

The technical solution described below is applicable to both the first embodiment and the second embodiment mentioned above.

In some embodiments, when the measurement information of reference signals is processed, joint processing can be performed on the measurement information of signals transmitted at different positions, so as to acquire the position information of the terminal device. The joint processing refers to forming the measurement information into a vector and then processing the vector using array signal processing methods.

In the present disclosure, multiple transmitting devices or multiple receiving devices in a positioning system are replaced by the moving terminal device transmitting or receiving signals at different positions, thereby achieving the effect of multi-point transmission or multi-point reception, so as to facilitate triangular geometric positioning. When the terminal device moves, the position of the terminal device changes. The two positions of the terminal device plus the position of the base station form three points, which can be used as points for triangular positioning or geometric positioning. The three points includes two unknown points, that is, the two positions of the terminal device are unknown. In current positioning systems, a terminal device interacts with multiple base stations (such as two or more) through reference signals. The multiple base stations and the terminal device form multiple points for triangular positioning or geometric positioning, where only the position of the terminal device is unknown, and the position of the terminal device can be obtained by solving equations.

Although the terminal device has two unknown positions in the present disclosure, the two positions can be estimated in practice. In the actual system, in order to improve positioning accuracy, multiple base stations can participate in positioning. The participation of multiple base stations can provide more information, so as to acquire the position information of the terminal device at the two positions.

For example, assuming that the two positions of the terminal device are (x1, y1) and (x2, y2) respectively. The terminal device measures the phases of the reference signals transmitted by base station n at the two positions, so as to acquire a phase difference . Assuming that the position coordinate of the base station n is (an, bn), the distance difference from base station n to the two positions can be calculated based on the position coordinate, or can be calculated using the phase difference. Assuming that the distance differences calculated by the two methods are equal, the following equation can be obtained: $mod \left(\sqrt{{\left({x}_{1}-{a}_{n}\right)}^{2} + {\left({y}_{1}-{b}_{n}\right)}^{2}}-\sqrt{{\left({x}_{2}-{a}_{n}\right)}^{2} + {\left({y}_{2}-{b}_{n}\right)}^{2} ,}λ\right) - {λω}_{n} / 2 π = 0$

Let: $\begin{matrix}{f}_{n} \left({x}_{1}, {y}_{1}, {x}_{2}, {y}_{2}\right) \\ = mod \left(\sqrt{{\left({x}_{1}-{a}_{n}\right)}^{2} + {\left({y}_{1}-{b}_{n}\right)}^{2}}-\sqrt{{\left({x}_{2}-{a}_{n}\right)}^{2} + {\left({y}_{2}-{b}_{n}\right)}^{2}},λ\right) \\ - {λω}_{n} / 2 π\end{matrix}$

When the number of base stations is greater than or equal to 4, the position of the terminal device can be estimated by solving the following equations: $\left\{\begin{matrix}{f}_{1} \left({x}_{1}, {y}_{1}, {x}_{2}, {y}_{2}\right) = 0 \\ {f}_{2} \left({x}_{1}, {y}_{1}, {x}_{2}, {y}_{2}\right) = 0 \\ ⋮ \\ {f}_{N} \left({x}_{1}, {y}_{1}, {x}_{2}, {y}_{2}\right) = 0\end{matrix}\right.$

Where N is greater than or equal to 4.

In some embodiments, the two positions of the terminal device participating in positioning may be correlated. For example, based on factors such as the moving speed of the terminal device, the characteristics of the vehicle-mounted device, and the approximate position of the terminal device, the terminal device or the positioning device can determine that the terminal device is traveling on a road. Combined with the map and moving speed, the offset of the second position of the terminal device relative to the first position can be determined. For example, if the first position coordinate is (x1,y1), the second position coordinate can be expressed as (*x*₁+*v*Δ*t*cos(θ),*y*₁+*v*Δ*t*sin(θ)), where v represents the moving speed of the terminal device, Δ*t* represents the time interval between the first position and the second position, and θ represents the angle between the moving direction and the x-axis. In other words, the second position can be calculated based on the first position, so only the first position needs to be solved.

The method embodiments of the present disclosure have been described in detail above in combination with FIG. 1 to FIG. 5. The device embodiments of the present disclosure will be described in detail in combination with FIG. 6 to FIG. 10 below. It should be understood that the descriptions of the device embodiments correspond to the description of the method embodiments. Therefore, for the parts that are not described in detail, reference may be made to the previous method embodiments.

FIG. 6 is a schematic block diagram of a terminal device provided by an embodiment of the present disclosure. The terminal device 600 shown in FIG. 6 may be any one of the terminal devices described above. The terminal device includes a receiving unit 610.

The receiving unit 610 is configured to receive, at a first position, a first reference signal transmitted by a network device.

The receiving unit 610 is further configured to receive, at a second position, a second reference signal transmitted by the network device.

A first measurement information of the first reference signal and a second measurement information of the second reference signal are configured to position the terminal device.

In some possible implementation, a time interval between a receiving moment of the first reference signal and a receiving moment of the second reference signal is less than or equal to a first preset duration.

In some possible implementations, the first preset duration is configured by the network device.

In some possible implementations, the receiving unit is further configured to: receive first configuration information transmitted by the network device. The first configuration information is configured to configure a transmission resource of the first reference signal and/or a transmission resource of the second reference signal.

In some possible implementations, the transmission resource includes time information for transmitting the first reference signal and/or the second reference signal.

In some possible implementations, the terminal device further includes a transmitting unit, configured to transmit first information to a positioning device. The first information is related to the first measurement information and/or the second measurement information.

In some possible implementations, the first information includes at least one of the following: the first measurement information, the second measurement information, and a difference between the first measurement information and the second measurement information.

In some possible implementations, in response to the first measurement information including a first receiving phase and the second measurement information including a second receiving phase, the first information further includes at least one of the following: a first receiving moment of the first reference signal, a second receiving moment of the second reference signal, and a time difference between the first receiving moment and the second receiving moment.

In some possible implementations, the first measurement information includes a first receiving phase, and the second measurement information includes a second receiving phase, and/or the first measurement information includes a first receiving moment, and the second measurement information includes a second receiving moment.

In some possible implementations, before transmitting first information to a positioning device, the terminal device further includes: a determination unit, configured to determine a first multipath number of the first reference signal. The determination unit is further configured to determine a second multipath number of the second reference signal. The transmitting unit is further configured to: in response to at least one of the first multipath number of the first reference signal and the second multipath number of the second reference signal being less than or equal to a first threshold, transmit the first information to the positioning device.

In some possible implementations, in response to a distance between the terminal device and the network device being a line-of-sight distance, the first measurement information of the first reference signal and the second measurement information of the second reference signal are configured to position the terminal device.

In some possible implementations, the first measurement information includes a first receiving phase, and the second measurement information includes a second receiving phase, in response to satisfying a first formula, a distance between the terminal device and the network device is a line-of-sight distance, and the first formula is represented by: $ω \approx 2 π ⋅ mod \left(vΔt cos ∅,λ\right) / λ$

ω represents a phase difference between the first receiving phase and the second receiving phase, *v* represents a moving speed of the terminal device, Δ*t* represents a time interval for the terminal device to move from the first position to the second position, 0̸ represents an angle between a line connecting a position of the network device and the first position, and a moving direction of the terminal device, mod represents a modulo operation, and λ represents a wavelength of the first reference signal.

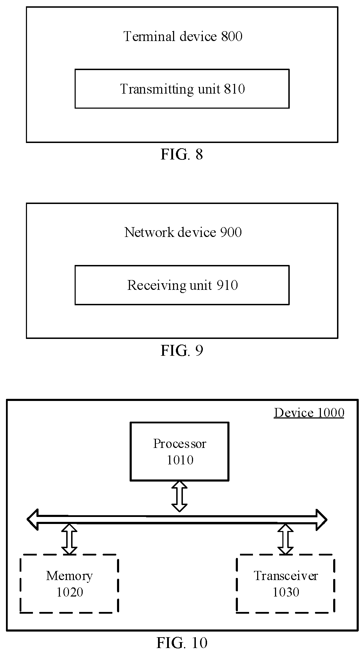

In optional embodiments, the receiving unit 610 and the transmitting unit may be transceivers 1030, the determination unit may be a processor 1010, and the terminal device 600 further includes a memory 1020, as shown in FIG. 10.

FIG. 7 is a schematic block diagram of a network device provided by an embodiment of the present disclosure. The network device 700 shown in FIG. 7 may be any one of the network devices described above. The network device includes a transmitting unit 710.

The transmitting unit 710 is configured to transmit a first reference signal to a terminal device at a first position.

The transmitting unit 710 is further configured to transmit a second reference signal to the terminal device at a second position.

A first measurement information of the first reference signal and a second measurement information of the second reference signal are configured to position the terminal device.

In some possible implementations, a time interval between a receiving moment of the first reference signal and a receiving moment of the second reference signal is less than or equal to a first preset duration.

In some possible implementations, the first preset duration is configured by the network device.

In some possible implementations, the transmitting unit is further configured to: transmit first configuration information to the terminal device. The first configuration information is configured to configure a transmission resource of the first reference signal and/or a transmission resource of the second reference signal.

In some possible implementations, the transmission resource includes time information for transmitting the first reference signal and/or the second reference signal.

In some possible implementations, in response to a distance between the terminal device and the network device being a line-of-sight distance, the first measurement information of the first reference signal and the second measurement information of the second reference signal are configured to position the terminal device.

In some possible implementations, the first measurement information includes a first receiving phase, and the second measurement information includes a second receiving phase, in response to satisfying a first formula, a distance between the terminal device and the network device is a line-of-sight distance, and the first formula is represented by: $ω \approx 2 π ⋅ mod \left(vΔt cos ∅,λ\right) / λ$

ω represents a phase difference between the first receiving phase and the second receiving phase, *v* represents a moving speed of the terminal device, Δ*t* represents a time interval for the terminal device to move from the first position to the second position, 0̸ represents an angle between a line connecting a position of the network device and the first position, and a moving direction of the terminal device, mod represents a modulo operation, and λ represents a wavelength of the first reference signal.

In optional embodiments, the transmitting unit 710 may be a transceiver 1030, and the network device 700 further includes a memory 1020 and a processor 1010, as shown in FIG. 10.

FIG. 8 is a schematic block diagram of a terminal device provided by an embodiment of the present disclosure. The terminal device 800 shown in FIG. 8 may be any one of the terminal devices described above. The terminal device includes a transmitting unit 810.

The transmitting unit 810 is configured to transmit, at a third position, a third reference signal to a network device.

The transmitting unit 810 is further configured to transmit, at a fourth position, a fourth reference signal to the network device.

A third measurement information of the third reference signal and a fourth measurement information of the fourth reference signal are configured to position the terminal device.

In some possible implementations, a time interval between a transmitting moment of the third reference signal and a transmitting moment of the fourth reference signal is less than or equal to a second preset duration.

In some possible implementations, the second preset duration is configured by the network device.

In some possible implementations, the terminal device further includes a receiving unit, configured to receive second configuration information transmitted by the network device. The second configuration information is configured to configure a transmission resource of the third reference signal and/or a transmission resource of the fourth reference signal.

In some possible implementations, the transmission resource includes time information for transmitting the third reference signal and/or the fourth reference signal.

In some possible implementations, the transmitting unit is further configured to: transmit second information to a positioning device. The second information includes at least one of the following: a first transmitting moment of the third reference signal, a second transmitting moment of the fourth reference signal, and a time difference between the first transmitting moment and the second transmitting moment.

In some possible implementations, the third measurement information includes a third receiving phase, and the fourth measurement information includes a fourth receiving phase, and/or the third measurement information includes a third receiving moment, and the fourth measurement information includes a fourth receiving moment.

In some possible implementations, in response to a distance between the terminal device and the network device being a line-of-sight distance, the third measurement information of the third reference signal and the fourth measurement information of the fourth reference signal are configured to position the terminal device.

In some possible implementations, the third measurement information includes a third receiving phase, and the fourth measurement information includes a fourth receiving phase, in response to satisfying a second formula, a distance between the terminal device and the network device is a line-of-sight distance, and the second formula is represented by: $ω \approx 2 π ⋅ mod \left(vΔt cos ∅,λ\right) / λ$

ω represents a phase difference between the third receiving phase and the fourth receiving phase, *v* represents a moving speed of the terminal device, Δ*t* represents a time interval for the terminal device to move from the third position to the fourth position, 0̸ represents an angle between a line connecting a position of the network device and the third position, and a moving direction of the terminal device, mod represents a modulo operation, and λ represents a wavelength of the third reference signal.

In optional embodiments, the receiving unit 810 and the transmitting unit may be transceivers 1030, and the terminal device 800 further includes a memory 1020 and a processor 1010, as shown in FIG. 10.

FIG. 9 is a schematic block diagram of a network device provided by an embodiment of the present disclosure. The network device 900 shown in FIG. 9 may be any one of the network devices described above. The network device 900 includes a receiving unit 910.

The receiving unit 910 is configured to receive a third reference signal transmitted by a terminal device at a third position.

The receiving unit 910 is further configured to receive a fourth reference signal transmitted by the terminal device at a fourth position.

A third measurement information of the third reference signal and a fourth measurement information of the fourth reference signal are configured to position the terminal device.

In some possible implementations, a time interval between a transmitting moment of the third reference signal and a transmitting moment of the fourth reference signal is less than or equal to a second preset duration.

In some possible implementations, the second preset duration is configured by the network device.

In some possible implementations, the network device further includes: a transmitting unit, configured to transmit second configuration information to the terminal device. The second configuration information is configured to configure a transmission resource of the third reference signal and/or a transmission resource of the fourth reference signal.

In some possible implementations, the transmission resource includes time information for transmitting the third reference signal and/or the fourth reference signal.

In some possible implementations, the network device further includes a transmitting unit, configured to transmit third information to a positioning device. The third information includes at least one of the following: the third measurement information, the fourth measurement information, and a difference between the third measurement information and the fourth measurement information.

In some possible implementations, the third measurement information includes a third receiving phase, and the fourth measurement information includes a fourth receiving phase, and/or the third measurement information includes a third receiving moment, and the fourth measurement information includes a fourth receiving moment.

In some possible implementations, before transmitting third information to a positioning device, the network device further includes a determination unit, configured to determine a third multipath number of the third reference signal. The determination unit is further configured to determine a fourth multipath number of the fourth reference signal. The transmitting unit is configured to: in response to at least one of the third multipath number of the third reference signal and the fourth multipath number of the fourth reference signal being less than or equal to a second threshold, transmit the third information to the positioning device.

In some possible implementations, in response to a distance between the terminal device and the network device being a line-of-sight distance, the third measurement information of the third reference signal and the fourth measurement information of the fourth reference signal are configured to position the terminal device.

In some possible implementations, the third measurement information includes a third receiving phase, and the fourth measurement information includes a fourth receiving phase, in response to satisfying a second formula, a distance between the terminal device and the network device is a line-of-sight distance, and the second formula is represented by: $ω \approx 2 π ⋅ mod \left(vΔt cos ∅,λ\right) / λ$

ω represents a phase difference between the third receiving phase and the fourth receiving phase, *v* represents a moving speed of the terminal device, Δ*t* represents a time interval for the terminal device to move from the third position to the fourth position, 0̸ represents an angle between a line connecting a position of the network device and the third position, and a moving direction of the terminal device, mod represents a modulo operation, and λ represents a wavelength of the third reference signal.

In optional embodiments, the receiving unit 910 and the transmitting unit may be transceivers 1030, the determination unit may be a processor 1010, and the network device 900 further includes a memory 1020, as shown in FIG. 10.

FIG. 10 is a schematic structural diagram of a communication device according to an embodiment of the present disclosure. The dashed lines in FIG. 10 indicate that the units or modules are optional. The device 1000 can be used to implement the method described in the above method embodiments. The device 1000 may be a chip, a terminal device or a network device.

The device 1000 may include at least one processor 1010. The at least one processor 1010 can support the device 1000 to implement the method described in the above embodiments for the method. The at least one processor 1010 may be a general-purpose processor or a special-purpose processor. For example, the processor is a central processing unit (CPU). Alternatively, the processor may be other general-purpose processor, a digital signal processor (DSP), an application specific integrated circuits (ASIC), a field programmable gate array (FPGA) or other programmable logic device, a discrete gate or a transistor logic device, a discrete hardware component, etc. The general-purpose processor may be a microprocessor or the processor may be any conventional processor, etc.

The device 1000 further includes at least one memory 1020 storing a program. The program is executed by the processor 1010 to perform the method described in the above embodiments. The memory 1020 is independent of or integrated in the processor 1010.

The device 1000 further includes a transceiver 1030. The processor 1010 communicates with other devices or chips via the transceiver 1030. For example, the processor 1010 transmits and receives data with other devices or chips via the transceiver 1030.

A computer-readable storage medium configured to store a program is provided according to an embodiment of the present disclosure. The computer-readable storage medium is applicable to the terminal device or the network device according to the embodiments of the present disclosure, and the program causes a computer to perform the method executed by the terminal device or the network device according to the embodiments of the present disclosure.

A computer program product is provided according to an embodiment of the present disclosure. The computer program product includes a program. The computer program product is applicable to the terminal device or the network device according to the embodiments of the present disclosure, and the program causes a computer to perform the method executed by the terminal device or the network device according to the embodiments of the present disclosure.

A computer program is further provided according to an embodiment of the present disclosure. The computer program can be applied to the terminal device or the network device according to the embodiments of the present disclosure, and the computer program causes a computer to execute the method executed by the terminal device or the network device according to the embodiments of the present disclosure.

It should be noted that, the terms "system" and "network" in the embodiments of the present disclosure may be used interchangeably. In addition, the terms used in the present disclosure are only used to explain the specific embodiment of the present disclosure, and are not intended to limit the present disclosure. The terms "first", "second", "third", and "fourth" used to are used to distinguish between different objects and are not intended to describe a particular order. In addition, the terms "include" and "have", and any variations thereof, are intended to cover non-exclusive inclusion.

In the embodiments of the present disclosure, the term "indicate" may be a direct indication, an indirect indication, or an association relationship. For example, A indicates B, which can mean that A indicates B directly, for example, B can be obtained through A, or it can mean that A indicates B indirectly, for example, A indicates C, and B can be obtained through C; or it can mean that there is an association between A and B.

In the embodiments of the present disclosure, "B corresponding to A" means that B is associated with A, and B can be determined according to A. However, it should be noted that determining B according to A does not mean determining B only according to A, but also according to A and/or other information.

In the embodiments of the present disclosure, the term "correspond" can indicate a direct or indirect corresponding relationship between the two, or an associative relationship between the two, or a relationship between indicating and being indicated, or configuring and being configured, and the like.

In the embodiments of the present disclosure, "pre-defined" or "pre-configured" can be implemented by pre-storing corresponding codes, tables, or other means that can be used to indicate relevant information in devices (such as terminal devices and network devices), which is not limited by the present disclosure. For example, pre-defined can refer to being defined in a protocol.

In the embodiments of the present disclosure, the "protocol" may refer to a standard protocol in the communication field, including, for example, LTE protocol, NR protocol and related protocols applied in future communication systems, which is not limited by the present disclosure.

In the embodiments of the present disclosure, the term "and/or" is only an association relationship describing the associated objects, which means that there can be three relationships. For example, A and/or B, which can mean that there are three situations: A alone, A and B, and B alone. In addition, the character "/" herein generally indicates an "or" relationship between the associated objects.

In the embodiments of the present disclosure, the magnitude of the reference numerals of the above processes does not imply the order of execution, and the order of execution of the processes should be determined by its function and inherent logic, and should not constitute any limitation on the implementation process of the embodiments of the present disclosure.

In the embodiments of the present disclosure, it should be understood that the disclosed system, device and method can be realized in other ways. For example, the embodiments for the device described above are only schematic. For example, the division of the units is only a logical function division. In actual implementation, there may be other division methods, such as a plurality of units or components can be combined or integrated into another system, or some features can be ignored or not implemented. In addition, the coupling or direct coupling or communication connection shown or discussed can be indirect coupling or communication connection through some interfaces, devices or units, which can be electrical, mechanical or other forms.

The units described as separate components may or may not be physically separated, and the components displayed as units may or may not be physical units, that is, they may be located in one place or distributed to multiple network units. A portion or all of the units can be selected according to actual needs to achieve the purpose of the embodiments of the present disclosure.

In addition, each respective functional unit in the embodiments of the present disclosure can be integrated into one processing unit, or each respective unit can exist physically, or two or more units can be integrated into one unit.

Through the description of the above embodiments, the above method embodiments can be implemented by means of software, hardware, firmware, or any combination thereof. In case of being implemented in software, it can be fully or partially implemented in the form of a computer program product. The computer program product includes one or more computer instructions. When the computer program instructions are loaded and executed on a computer, the flow or function described in the embodiment of the present disclosure is generated in whole or in part. The computer can be a general-purpose computer, a special-purpose computer, a computer network, or other programmable devices. The computer instructions can be stored in a computer-readable storage medium or transmitted from one computer-readable storage medium to another computer-readable storage medium. For example, the computer instructions can be transmitted from a website, a computer, a server or a data center to a website, computer, server or data to another website site, computer, server, or data center through wired (such as coaxial cable, optical fiber, digital subscriber line (DSL)) or wireless (such as infrared, wireless, microwave, etc.). The computer-readable storage medium can be any available medium that a computer can read or a data storage device such as a server, data center, etc. which contains one or more available media integration. The available medium may be a magnetic medium such as a floppy disk, a hard disk, a magnetic tape, etc., or an optical medium such as a digital video disc (DVD) or a semiconductor medium such as a solid state disk (SSD), etc.

The above is only the specific embodiments of the present disclosure, but the protection scope of the present disclosure is not limited thereto. Any variations or substitutions that can be easily conceived by those skilled in the art within the technical scope disclosed by the present disclosure, should be included in the protection scope of the present disclosure. Therefore, the protection scope of the present disclosure should be based on the protection scope of the claims.

## Claims

1. A method for positioning, comprising:
receiving, by a terminal device at a first position, a first reference signal transmitted by a network device; and
receiving, by the terminal device at a second position, a second reference signal transmitted by the network device;
wherein a first measurement information of the first reference signal and a second measurement information of the second reference signal are configured to position the terminal device.

2. The method according to claim 1, wherein a time interval between a receiving moment of the first reference signal and a receiving moment of the second reference signal is less than or equal to a first preset duration.

3. The method according to claim 2, wherein the first preset duration is configured by the network device.

4. The method according to any one of claims 1 to 3, further comprising:
receiving, by the terminal device, first configuration information transmitted by the network device, wherein the first configuration information is configured to configure a transmission resource of the first reference signal and/or a transmission resource of the second reference signal.

5. The method according to claim 4, wherein the transmission resource includes time information for transmitting the first reference signal and/or the second reference signal.

6. The method according to any one of claims 1 to 5, further comprising:
transmitting, by the terminal device, first information to a positioning device, wherein the first information is related to the first measurement information and/or the second measurement information.

7. The method according to claim 6, wherein the first information includes at least one of the following: the first measurement information, the second measurement information, and a difference between the first measurement information and the second measurement information.

8. The method according to claim 7, wherein in response to the first measurement information including a first receiving phase and the second measurement information including a second receiving phase, the first information further includes at least one of the following: a first receiving moment of the first reference signal, a second receiving moment of the second reference signal, and a time difference between the first receiving moment and the second receiving moment.

9. The method according to claim 7, wherein the first measurement information includes a first receiving phase, and the second measurement information includes a second receiving phase; and/or
the first measurement information includes a first receiving moment, and the second measurement information includes a second receiving moment.

10. The method according to any one of claims 6 to 9, wherein before transmitting, by the terminal device, first information to a positioning device, the method further comprises:
determining, by the terminal device, a first multipath number of the first reference signal; and
determining, by the terminal device, a second multipath number of the second reference signal;
wherein transmitting, by the terminal device, first information to a positioning device includes:
in response to at least one of the first multipath number of the first reference signal and the second multipath number of the second reference signal being less than or equal to a first threshold, transmitting, by the terminal device, the first information to the positioning device.

11. The method according to any one of claims to 1 to 10, wherein in response to a distance between the terminal device and the network device being a line-of-sight distance, the first measurement information of the first reference signal and the second measurement information of the second reference signal are configured to position the terminal device.

12. The method according to claim 11, wherein the first measurement information includes a first receiving phase, and the second measurement information includes a second receiving phase,
in response to satisfying a first formula, a distance between the terminal device and the network device is a line-of-sight distance, and the first formula is represented by: $ω \approx 2 π ⋅ mod \left(vΔt cos ∅,λ\right) / λ$ wherein ω represents a phase difference between the first receiving phase and the second receiving phase, *v* represents a moving speed of the terminal device, Δ*t* represents a time interval for the terminal device to move from the first position to the second position, ∅ represents an angle between a line connecting a position of the network device and the first position, and a moving direction of the terminal device, mod represents a modulo operation, and λ represents a wavelength of the first reference signal.

13. A method for positioning, comprising:
transmitting, by a network device, a first reference signal to a terminal device in response to the terminal device being at a first position; and
transmitting, by the network device, a second reference signal to the terminal device in response to the terminal device being at a second position;
wherein a first measurement information of the first reference signal and a second measurement information of the second reference signal are configured to position the terminal device.

14. The method according to claim 13, wherein a time interval between a receiving moment of the first reference signal and a receiving moment of the second reference signal is less than or equal to a first preset duration.

15. The method according to claim 14, wherein the first preset duration is configured by the network device.

16. The method according to any one of claims 13 to 15, further comprising:
transmitting, by the network device, first configuration information to the terminal device, wherein the first configuration information is configured to configure a transmission resource of the first reference signal and/or a transmission resource of the second reference signal.

17. The method according to claim 16, wherein the transmission resource includes time information for transmitting the first reference signal and/or the second reference signal.

18. The method according to any one of claims 13 to 17, wherein in response to a distance between the terminal device and the network device being a line-of-sight distance, the first measurement information of the first reference signal and the second measurement information of the second reference signal are configured to position the terminal device.

19. The method according to claim 18, wherein the first measurement information includes a first receiving phase, and the second measurement information includes a second receiving phase,
in response to satisfying a first formula, a distance between the terminal device and the network device is a line-of-sight distance, and the first formula is represented by: $ω \approx 2 π ⋅ mod \left(vΔt cos ∅,λ\right) / λ$ wherein ω represents a phase difference between the first receiving phase and the second receiving phase, *v* represents a moving speed of the terminal device, Δ*t* represents a time interval for the terminal device to move from the first position to the second position, ∅ represents an angle between a line connecting a position of the network device and the first position, and a moving direction of the terminal device, mod represents a modulo operation, and λ represents a wavelength of the first reference signal.

20. A method for positioning, comprising:
transmitting, by a terminal device at a third position, a third reference signal to a network device; and
transmitting, by the terminal device at a fourth position, a fourth reference signal to the network device;
wherein a third measurement information of the third reference signal and a fourth measurement information of the fourth reference signal are configured to position the terminal device.

21. The method according to claim 20, wherein a time interval between a transmitting moment of the third reference signal and a transmitting moment of the fourth reference signal is less than or equal to a second preset duration.

22. The method according to claim 21, wherein the second preset duration is configured by the network device.

23. The method according to any one of claims 20 to 22, further comprising:
receiving, by the terminal device, second configuration information transmitted by the network device, wherein the second configuration information is configured to configure a transmission resource of the third reference signal and/or a transmission resource of the fourth reference signal.

24. The method according to claim 23, wherein the transmission resource includes time information for transmitting the third reference signal and/or the fourth reference signal.

25. The method according to any one of claims 20 to 24, further comprising:
transmitting, by the terminal device, second information to a positioning device, wherein the second information includes at least one of the following: a first transmitting moment of the third reference signal, a second transmitting moment of the fourth reference signal, and a time difference between the first transmitting moment and the second transmitting moment.

26. The method according to any one of claims 20 to 25, wherein the third measurement information includes a third receiving phase, and the fourth measurement information includes a fourth receiving phase; and/or
the third measurement information includes a third receiving moment, and the fourth measurement information includes a fourth receiving moment.

27. The method according to any one of claims 20 to 26, wherein in response to a distance between the terminal device and the network device being a line-of-sight distance, the third measurement information of the third reference signal and the fourth measurement information of the fourth reference signal are configured to position the terminal device.

28. The method according to claim 27, wherein the third measurement information includes a third receiving phase, and the fourth measurement information includes a fourth receiving phase,
in response to satisfying a second formula, a distance between the terminal device and the network device is a line-of-sight distance, and the second formula is represented by: $ω \approx 2 π ⋅ mod \left(vΔt cos ∅,λ\right) / λ$ wherein ω represents a phase difference between the third receiving phase and the fourth receiving phase, v represents a moving speed of the terminal device, Δ*t* represents a time interval for the terminal device to move from the third position to the fourth position, ∅ represents an angle between a line connecting a position of the network device and the third position, and a moving direction of the terminal device, mod represents a modulo operation, and λ represents a wavelength of the third reference signal.

29. A method for positioning, comprising:
receiving, by a network device, a third reference signal transmitted by a terminal device at a third position; and
receiving, by the network device, a fourth reference signal transmitted by the terminal device at a fourth position;
wherein a third measurement information of the third reference signal and a fourth measurement information of the fourth reference signal are configured to position the terminal device.

30. The method according to claim 29, wherein a time interval between a transmitting moment of the third reference signal and a transmitting moment of the fourth reference signal is less than or equal to a second preset duration.

31. The method according to claim 30, wherein the second preset duration is configured by the network device.

32. The method according to any one of claims 29 to 31 further comprising:
transmitting, by the network device, second configuration information to the terminal device, wherein the second configuration information is configured to configure a transmission resource of the third reference signal and/or a transmission resource of the fourth reference signal.

33. The method according to claim 32, wherein the transmission resource includes time information for transmitting the third reference signal and/or the fourth reference signal.

34. The method according to any one of claims 29 to 33, further comprising:
transmitting, by the network device, third information to a positioning device, wherein the third information includes at least one of the following: the third measurement information, the fourth measurement information, and a difference between the third measurement information and the fourth measurement information.

35. The method according to any one of claims 29 to 34, wherein the third measurement information includes a third receiving phase, and the fourth measurement information includes a fourth receiving phase; and/or
the third measurement information includes a third receiving moment, and the fourth measurement information includes a fourth receiving moment.

36. The method according to claim 34 or 35, wherein before transmitting, by the network device, third information to a positioning device, the method further comprises:
determining, by the network device, a third multipath number of the third reference signal; and
determining, by the network device, a fourth multipath number of the fourth reference signal;
wherein transmitting, by the network device, third information to a positioning device includes:
in response to at least one of the third multipath number of the third reference signal and the fourth multipath number of the fourth reference signal being less than or equal to a second threshold, transmitting, by the network device, the third information to the positioning device.

37. The method according to any one of claims 29 to 36, wherein in response to a distance between the terminal device and the network device being a line-of-sight distance, the third measurement information of the third reference signal and the fourth measurement information of the fourth reference signal are configured to position the terminal device.

38. The method according to claim 37, wherein the third measurement information includes a third receiving phase, and the fourth measurement information includes a fourth receiving phase,
in response to satisfying a second formula, a distance between the terminal device and the network device is a line-of-sight distance, and the second formula is represented by: $ω \approx 2 π ⋅ mod \left(vΔt cos ∅,λ\right) / λ$ wherein ω represents a phase difference between the third receiving phase and the fourth receiving phase, *v* represents a moving speed of the terminal device, Δ*t* represents a time interval for the terminal device to move from the third position to the fourth position, ∅ represents an angle between a line connecting a position of the network device and the third position, and a moving direction of the terminal device, mod represents a modulo operation, and λ represents a wavelength of the third reference signal.
